# EUROPEAN PATENT APPLICATION

(11) **EP 4 817 952 A1**
(43) Date of publication of application: **07.10.2026**
(21) Application number: 26160872.3
(22) Date of filing: 26.02.2026
(51) Int. Cl.: B60N 3/04, B32B 7/14, B32B 7/027, B32B 27/08, B32B 27/12, B32B 27/36, B60R 13/01, B60R 13/02, B60R 13/08

(54) **LAMINATED STRUCTURE, COATING, AND METHOD FOR MANUFACTURING THEREOF**

(30) Priority: 26.02.2025 BE 202505115
(71) Applicant: Dorsca BV, 2500 Lier (BE)
(72) Inventor: Koeners, Daniël Hendrik Erik Camille, 2500 Lier (BE)
(74) Representative: Arnold & Siedsma

(57) **Abstract**

A laminate structure (10) for holding the cladding material (M3) of a motor vehicle, comprising: a base layer (L1) with a first side (11) and a second side (12) opposite the first side, a first adhesion layer (L2) applied to one of the first and second sides of the base layer (L1) and designed to hold the cladding material (M3), an optional second adhesion layer (L2') that is applied to the other of the first and second sides of the base layer (L1), where the base layer (L1) is a barrier film that includes a thermoplastic polyester P1, and the first adhesion layer (L2), and optionally the second adhesion layer (L2'), respectively a thermoplastic polyester P2, P2'.

## Description

### TECHNICAL FIELD

The present invention relates to the technical field of laminate structures for use in a vehicle cladding, more specifically a motor vehicle. The invention also relates to a cladding that includes such a laminate structure and to a vehicle that includes such a cladding.

### BACKGROUND

In the recent period, there has been growing concern about the environmental impact of the automotive industry, particularly with regard to the waste streams resulting from the end of life of vehicles. Part of this waste consists of the cladding material of cars, which is often difficult to recycle due to its complex composition and the materials used. Traditionally, these cladding materials are made from a combination of different polymers, textiles and adhesives, which are not easy to separate from each other.

There is therefore a need for innovative solutions that improve the recyclability of the materials and/or components of a vehicle such as an automobile, preferably without compromising the aesthetic and functional properties that consumers expect.

### SUMMARY OF THE INVENTION

Aspects of the invention aim to provide an automotive cladding that can be recycled in a cost-effective manner, in particular to improve the environmental impact of the automotive industry. This can not only help reduce environmental impact, but can also provide economic benefits by recovering valuable materials and reducing waste disposal costs.

Aspects of the invention can also address increasing regulatory and consumer pressure to provide more sustainable products, providing a solution for automakers looking to reduce their carbon footprint.

### Laminate structure

A first aspect of this is a laminate structure (10) for holding the cladding material (M3) of an automobile. The laminate structure includes:
- a base layer (L1) with a first side (11) and a second side (12) opposite the first side;
- a first adhesion layer (L2) applied to one of the first and second sides of the base layer (L1) (e.g. the first side) is designed to hold the cladding material (M3);
- an optional second adhesion layer (L2') can be applied to the other (e.g. the second side) of the first and second sides of the base layer (L1).

The base layer (L1) is a barrier film that includes a thermoplastic polyester P1, preferably consisting mainly of the thermoplastic polyester P1. The first adhesion layer (L2) (and optionally the second adhesion layer (L2')) includes, respectively, a thermoplastic polyester P2, P2', preferably consisting mainly of the thermoplastic polyester P2, P2', respectively.

Preferably, the first adhesion layer (L2) is applied to the first side of the base layer (L1) according to a covering in a range of 10 - 40 grams per square meter (gsm); and optionally, the second adhesion layer (L2'), if any, is applied to the second side of the base layer (L1) according to a coverage of 10 - 40 grams per square meter (gsm).

The invention is based on the insight that the recyclability of the laminate structure can be improved through a smart choice of materials. More specifically, by using polyester several times for both the base layer and in the adhesion layer, the recyclability of both layers can be improved. On top of that, by using thermoplastic polyesters, there is again a recyclability advantage (e.g. compared to thermosets) because the thermoplastic polyesters can be reheated and shaped, which makes the thermoplastic polyesters more suitable for recycling. In addition, the thermoplastic of the adhesion layer provides the advantage of improved retention of the cladding material (such as a carpet, felt, etc.).

As a result, the invention can contribute to a reduction in the environmental impact of the automotive industry, and one can facilitate the recovery of valuable materials and/or reduce waste disposal costs. This has the advantage that the invention can provide a more sustainable product, providing a solution for car manufacturers who want to reduce their carbon footprint. Moreover, the advantage that the invention can provide a more sustainable product so that it offers a solution for car manufacturers who want to reduce their carbon footprint is further enhanced by applying the adhesion layer as a network of filaments as described herein.

The "barrier film" is a common term and typically refers to a film with waterproof and/or acoustically insulating and/or gas-tight properties. The term "thermoplastic" is a common term and refers to a type of material that softens and melts when heated, and hardens again when cooled.

The polymers (indicated herein as P1, P2, P2') have been described as "thermoplastic polyesters" and belong to the polyester family. Such polymers are typically characterized by an ability to soften when heated and to harden again when cooled without losing their mechanical and/or chemical properties. As a result, the thermoplastic polyesters **P1,** P2, P2' ensure that the base layer and the adhesion layer can be processed well via thermoforming and can thus achieve excellent results in the automotive industry.

Preferably, the base layer (L1) and the first adhesion layer (L2) have a melting point at which the melting point of the base layer (L1) is higher than the melting point of the first adhesion layer (L2) (and higher than the melting point of the second adhesion layer (L2) if this second adhesion layer (L2') is present). By making a smart choice of melting points, the functionality of the laminate structure improves. Namely, the cladding material (M3) can be easily held by melting only the adhesion layer (and not the base layer), applying the cladding material (M3) to the adhesion layer, and allowing the adhesion layer to solidify so that the cladding material (M3) is retained. **In** this way, not only is there a firm fixation between the cladding material (M3) and the adhesion layer, but also a better preservation of the structure and/or the waterproof and/or acoustically insulating and/or gas-tight properties of the base layer (L1). The melting points of the relevant layers as described herein can be determined via DSC.

Preferably, polyester **P1** and polyester P2 each have a melting point, where the melting point of polymer **P1** is higher than the melting point of polymer P2. By making a smart choice of the melting points of the polyesters, one provides both the desired adhesion properties of the laminate structure and a preservation of the desired properties provided by the base layer (dimensional stability, and waterproof and/or acoustically insulating and/or gas-tight). The melting points of the polymers in question as described herein can be determined via DSC.

Preferably, polyester **P1** has a melting point that is located in the range of 100 - 350 °C, preferably 160 - 300 °C, more preferably 180 - 280 °C, even more preferably 200 - 260 °C, such as 225 °C. As a result, the polyester P1 ensures that the base layer (L1) retains a desired dimensional stability (e.g. during heating, such as during the fusing of a cladding material (M3)).

Preferably, the polyester P2 has a melting point that is located in the range of 80 - 180 °C, preferably 90 - 150 °C, such as 118 °C. The advantage is that the polyester P2 can thus provide a desired and efficient adhesion with the cladding material (M3), typically via fusion. **In** this way, the laminate structure ensures that the cladding material can hold the cladding material firmly. More specifically, the fusion ensures a firm bond between the adhesion layer and the cladding material (M3).

According to one embodiment, the first adhesion layer (L2) is applied to the first side, and the second adhesion layer (L2') is applied to the second side of the base layer (L1). Preferably, the adhesion layers are based on the same thermoplastic polyester, in favor of easier manufacturing and/or recyclability. As used herein, "based on" means that the layer in question largely includes the material in question. "Same thermoplastic polyester" means that the thermoplastic polyesters have the same material properties. According to another embodiment, the adhesion layers are based on different thermoplastic polyester, in favor of the use of specific different material properties where necessary.

Preferably, the base layer (L1) contains at least 95%, preferably at least 98%, even more preferably at least 99%, preferably 100% polyester P1, based on the total weight of the base layer (L1). This benefits recyclability. Preferably the first and optionally the second adhesion layer (L2, L2') contain respectively at least 95%, preferably at least 98%, preferably at least 99%, preferably 100% of polyester P2, P2', based on the total weight of the layer in question (L2, L2').

Preferably, the base layer (L1) is a barrier film that consists of the thermoplastic polyester P1. Preferably, the first adhesive layer (L2) consists of the thermoplastic polyester P2. Preferably, the second adhesion layer (L2') (if present) consists of a thermoplastic polyester P2'.

According to a preferred embodiment, the base layer (L1) is a barrier film that consists of the thermoplastic polyester P1 and the first adhesion layer (L2) consists of the thermoplastic polyester P2. This preferred form of embodiment has a particularly desirable recyclability. Preferably, the second adhesive layer (L2') is also provided, which consists of the thermoplastic polyester P2'.

Some of the preferred properties of the polyester P2 in the first adhesion layer L2 (and the polyester P2' in the second adhesion layer L2' if this is provided) will now be discussed.

Preferably, the polyester P2 (in the first adhesion layer (L2)) is a copolyester, and optionally the polyester P2' (in the second adhesion layer (L2')) is a copolyester. The copolyester can be formed by the polymerization of two or more different types of monomers, and has the advantage that desired properties can be set according to the application (by choosing the monomers and incorporating them into the polymer backbone, the properties of the polymer backbone can be influenced). Preferably, the copolyester (in the adhesion layer(s)) contains one or more monomers that disrupt the orderly crystalline structure so that the polyester P2 (and optionally P2') in the adhesion layer (L2 and optionally L2') are more amorphous in structure compared to the structure of the polyester P1 in the base layer. The more amorphous structure of the polyester P2, P2' in the adhesion layer (L2 and optionally L2') typically results in a lower melting point compared to the melting point of the polyester P1 in the base layer (L1).

Preferably, the polyester P2 and/or polyester P2' has a melt viscosity (Pa*s) of at least 20 Pa*s, preferably between 20 - 80 Pa*s, such as 30°C Pa*s. This melt viscosity provides for a desired application and/or dispersion of an applied polyester P2 and/or polyester P2' on the base layer (L1) in favor of the properties of the relevant adhesion layer (L2, L2'). **In** particular, when the application of polyester P2 and/or polyester P2' (e.g. application of continuous straight polyester P2 and/or polyester P2' tracks via nozzle) is followed by a submission to an increased airflow (e.g. an airflow of at least 3 m/s, preferably between 5 - 20 m/s, more preferably between 10 - 100 m/s) to disturb the applied continuous straight polyester P2 and/or polyester P2' to create a network filaments on the relevant side of the base layer.

Preferably, the polyester P2 and/or polyester P2' has a glass transition temperature (Tg) in the range of 15 - 50 °C, such as 26°C, where this glass transition temperature (Tg) is determined with DSC. Generally speaking, "DSC" stands for "Differential Scanning Calorimetry". By carefully tuning the Tg, the adhesion, durability and resistance of the respective adhesion layer (L2, L2') can be improved.

In a preferred form (e.g. with one adhesion layer), polyester P1 has a melting point in the range of 180 - 280 °C and polyester P2 has a melting point in the range of 80 - 200 °C and where the melting point of polyester P1 is higher than the melting point of polyester P2.

In a preferred embodiment (e.g. with adhesion layers), polyester P1 has a melting point in the range of 180 - 280 °C and polyester P2' and P2' each have a melting point in the range of 80 - 200 °C and where the melting point of polyester P1 is higher than the melting point(s) of polyester P2 and P2'.

Preferably, and generally applicable herein, the melting point of polyester P1 is preferably at least 10°C higher than the melting point(s) of polyester P2 (and P2'), preferably at least 20 °C higher, preferably at least 30°C. The smart choice of melting points ensures both a better retention of dimensional stability and a desired adhesion behaviour, such as a firm hold of a cladding material (e.g. carpet, felt, ...).

Preferably, the base layer (L1) has a thickness (µm) in the range of 10 - 400 µm. Such thickness gives a desired dimensional stability and/or acoustic properties. More preferably, the base layer (L1) has a thickness in the range of **11** - 300 µm, more preferably 15 - 200 µm. Such thickness gives a better rolling behavior of the base layer during rolling on a roll (e.g. a roll for transport). Even more preferably, the base layer (L1) has a thickness between 20 - 100 µm, more preferably between 20 - 50 µm. Such thickness makes it easier to roll up the laminate structure.

Preferably, the base layer (L1) has a density (g/cm3) in the range of 0.5 - 3 g/cm3 as determined via DIN53479 at a thickness of 25 µm. Preferably, the base layer (L1) has a density (g/cm3) in the range of 0.9 - 2 g/cm3, such as 1 g/cm3, 1.3 g/cm3 or 1.6 g/cm3. By making a smart choice of density, the desired acoustic and/or gas-tight properties can be provided.

Preferably, the base layer (L1) has a tensile strength ("tensile strength") at yield strength length/transverse direction of at least 10 N/mm², preferably in the range of 15 - 55N/mm² determined via DIN 53457 at a thickness of 25 µm. By providing such tensile stress (N/mm²), the handling behavior of the base layer (L1) and/or the unwinding behavior improves.

Preferably, the base layer (L1) has a maximum strength ("ultimate strength") length/transverse direction of at least 20 N/mm², preferably in the range of 40 - 90 N/mm², determined via DIN 53455 at a thickness of 25 µm. By providing such maximum strength (N/mm²), dimensional stability improves.

Preferably, the base layer (L1) has an elongation at break (%) of at least 60 %, preferably at least 80 %, preferably at least 90 %, determined by DIN 53455 at a thickness of 25 µm. By choosing a high elongation at break, the formability of the laminate structure improves, so that the laminate structure can take over the chassis shapes (e.g. the shapes of a car chassis). According to one embodiment, the base layer (L1) has an elongation at break in the range of 250 - 450 %. Such elongation provides improved formability, especially for thermoforming applications.

Preferably, the base layer (L1), as determined by the after application via thermoforming, a elongation/transverse direction of more than 20 % determined by DIN 53455, at a thickness of 25 µm and that this base layer has an air permeability of almost 0 cm³/s/cm² as determined by ASTM D737 at a temperature of more than 100 °C, such as at a temperature of 110 °C.

According to an embodiment, the base layer (L1) has a tensile stress at yield strength longitudinal/transverse direction in the range of 15 - 55 N/mm²; and an elongation at break of at least 80%, preferably at least 90%. Such a combination of tensile stress and elongation at break has particularly desirable formability properties.

Preferably, the base layer (L1) has a water vapour permeability (g/m²· d) in the range of 0 - 25 g/m²·d, determined by DIN 53112. This standard measures the speed at which water vapor can penetrate the material. The unit is g/m²-d (grams per square meter per day) and the conditions are 85% relative humidity (RH) (on one side) to 0% relative humidity (on the other side), at 23°C. By including this property in the base layer, the desired waterproof properties are ensured.

Preferably, the base layer **L1** is airtight and/or the base layer has an air permeability (cm³/s/cm²) that is almost equal to, preferably equal to, 0 cm³/s/cm² as determined by ASTM D737. Such a property provides particularly advantageous insulation properties when the laminate structure is used in a cladding, preferably a vehicle cladding

The base layer (L1) is typically a dimensionally stable base layer. The dimensionally stable property of the base layer (L1) refers to the property that the dimensions of the base layer do not or hardly change during transport and/or manipulation thereof at standard room temperatures (18 - 30 °C).

Preferably, the first adhesion layer (L2) and optionally the second adhesion layer (L2') have a glass transition temperature (Tg) in the range of 15 - 50 °C, where the glass transition temperature (Tg) is determined with DSC. By carefully providing the Tg with the adhesion layer, desired adhesion, durability and resistance can be ensured.

According to an embodiment, the first adhesion layer (L2) and optionally the second adhesion layer (L2') have a melting temperature in the range of 90 - 200 °C; and/or where the first adhesion layer (L2) and optionally the second adhesion layer (L2') have a melting temperature that is lower than the melting temperature of the base layer (L1).

According to a preferred embodiment, the first adhesion layer (L2) has a melting temperature (TsL2) in the range of 90 - 200 °C and where this melting temperature (TsL2) of the first adhesion layer (L2) is lower than the melting temperature of the base layer (L1), preferably at least 10°C lower, preferably at least 25°C, preferably at least 50°C lower. As a result, the laminate structure has very desirable adhesion properties, and the laminate structure can be easily manufactured.

According to a preferred embodiment, the first adhesion layer (L2) and the second adhesion layer (L2') have a melting temperature (TsL2 , TsL2';) in the range of 90 - 200 °C and at which these melting temperatures (TsL2 , TsL2';) are lower than the melting temperature of the base layer (L1), preferably at least 10°C lower, preferably at least 25°C, preferably at least 50°C lower. As a result, the laminate structure (with adhesion layers (L2 and L2')) has very desirable adhesion properties, and the laminate structure can easily be manufactured.

Preferably, the first adhesion layer (L2) is applied to the first side of the base layer (L1) according to a covering (gsm) of 10 - 40 grams per square meter (gsm), such as 15 gsm. This allows the laminate structure to hold the cladding material firmly with efficient use of materials.

Preferably, the second adhesion layer (L2') is applied to the second side of the base layer (L1) according to a covering (gsm) in the range of 10 - 40 grams, such as 15 gsm, per square meter. This increases the bonding functionality of the laminate structure and allows the second adhesion layer (L2') to hold a cladding material firmly with an efficient use of materials.

According to a embodiment, both the first adhesion layer (L2) and the second adhesion layer (L2') are applied to the respective side of the base layer (L1) according to a covering (gsm) in the range of 10 - 40 grams, such as 15 gsm, per square meter. This increases the bonding functionality of the laminate structure and allows both the first and second adhesion layers (L2') to hold a cladding material securely with efficient use of materials.

Preferably, the first adhesive layer (L2) and/or the second adhesive layer (L2') are applied to the relevant side of the base layer (L1) according to a "discontinuous coverage". This means that the adhesion layer in question (L2, L2') does not provide complete coverage of the base layer. For example, the adhesion layer (L2) and/or the second adhesion layer (L2') can be applied to the relevant side of the base layer (L1) so that they cover a maximum of 99%, preferably a maximum of 95%. This allows the desired adhesion properties to the laminate structure to be provided efficiently, especially with efficient use of materials. This also benefits the durability and/or recyclability of the product.

According to a embodiment, the first adhesion layer (L2) and/or the second adhesion layer (L2') is (or are) applied to the relevant side of the base layer (L1) according to a discontinuous coverage, i.e. so that the base layer (L1) is exposed under the relevant adhesion in areas without coverage, which areas are mainly surrounded by material of the relevant adhesion layer. **In** particular, the base layer (L1) is exposed under the relevant adhesion in areas without covering which are mainly surrounded by filaments of thermoplastic polyester (P2, P2') of the adhesion layer in question.

Preferably, the first adhesion layer (L2) and/or the second adhesion layer (L2') are applied to the relevant side of the base layer (L1) and where the first adhesion layer (L2) and/or the second adhesion layer (L2') (each) cover at least 25 % of the surface of the side in question, and e.g. a maximum of 95 %. The lower limit of the covering ensures improved adhesion capacity.

Preferably, the first adhesion layer (L2) and/or the second adhesion layer (L2') are applied to the relevant side of the base layer (L1) and with the first adhesion layer (L2) and/or the second adhesion layer (L2') (each) covering a maximum of 85 % of the surface of the side in question. The upper limit of the covering ensures improved efficient use of materials, in favor of durability and/or recyclability

According to a certain designation, the first adhesion layer (L2) and the second adhesion layer (L2') are applied to the first and second sides of the base layer (L1) respectively, with the first adhesion layer (L2) and the second adhesion layer (L2') each covering at least 25 % and at most 85 % of the surface of the side in question. As a result, the laminate structure provides a broad adhesion functionality with efficient use of materials, in favor of durability and/or recyclability.

### Network of filaments

Preferably, the first adhesion layer (L2) and/or the second adhesion layer (L2') forms a network of filaments on the relevant side of the base layer, where these filaments include the thermoplastic polyester P2 and/or P2', more specifically where the filaments consist of the thermoplastic polyester P2 and/or P2. Such a network has the advantage that a desired adhesion functionality can be achieved with an efficient use of materials, which benefits durability and/or recyclability.

The "network of filaments" typically refers to a structure of thin, thread-like strands of the thermoplastic polyester P2 and/or P2 that are connected to each other. Such structure can take different forms, e.g. in the form of a web or grid.

As already indicated herein, the network has the advantage that a desired adhesion functionality can be achieved with an efficient use of materials, which benefits durability and/or recyclability. This has the advantage of providing a more sustainable product and offering a solution for car manufacturers who want to reduce their carbon footprint.

According to an embodiment, the first adhesion layer (L2) is applied in the form of a web of thread-like strands of the thermoplastic polyester P2. This benefits the durability of the product and as a result of efficient use of materials. According to a preferred embodiment, the first adhesion layer (L2) is applied in the form of a web of thread-like strands whose strands have a maximum width of less than 1 mm, preferably less than 0.5 mm, even more preferably a thickness of less than 0.1 mm. The width is measured perpendicular to the longitudinal direction of the strand. The advantage of using such fine strands is that excellent product performance, especially a high and uniform bond strength, can be achieved with a significantly reduced total amount of valuable bonding material. This leads to a more sustainable product and a smaller carbon footprint, providing a solution for car manufacturers who want to reduce their environmental impact without compromising on quality.

According to an embodiment, the adhesion layer (L2) is performed on the base layer, i.e. on the essentially flat surface of the base layer, as an open network of interconnected filaments, where the network defines open meshes leaving parts of the underlying base layer (L1) uncovered. This way the network can Contribute to a reduction of the environmental impact, as well as provide economic benefits by recovering valuable materials, namely a desired adhesion can be provided with an efficient material used. The advantage of the open, non-fully opaque structure of the adhesion layer on the base layer is an efficient use of materials (e.g. 10-40 g/m²), which leads to direct economic benefits and a reduced environmental impact. Typically, the network of filaments also forms a 3D structure on the essentially flat surface of the base layer. This can promote bonding.

According to an embodiment, the filaments in the network are randomly oriented and form a non-geometric, chaotic pattern. The advantage of the chaotic pattern is that the adhesion layer acquires desirable properties, in particular a desired bond strength and the resistance to peeling in all directions (longitudinal, transverse and diagonal directions).

According to an embodiment, the filaments cross each other and the filaments are fused together at the intersections to form a coherent web. The advantage of these fused intersections is that they form a structurally stable and coherent web. The adhesion layer therefore functions as one integrated layer instead of as a collection of separate threads. This guarantees the internal strength of the adhesion layer itself, both during the manufacturing process and in the final product, and contributes to the overall robustness of the bond.

According to an embodiment, there are open meshes defined by the network, where the open meshes have a varying size and an irregular shape. The variation in mesh size gives the network a complex, three-dimensional topography. This offers the functional advantage of being able to facilitate effective mechanical anchoring with a wide range of cladding materials (M3), regardless of slight variations in the texture or fibre density of the cladding material. This increases the versatility and reliability of the laminate structure.

The first adhesion layer (L2) may be applied to a first side **(11)** of the base layer (L1) and the second coat of adhesion (L2') may be applied to the second side (12) of the base layer (L1). Preferably, the first adhesive layer (L2) and the second adhesive layer (L2') are made of the same material, in favor of recyclability. According to one embodiment, both the first adhesion layer (L2) and the second adhesion layer (L2') are made of the same type of copolyester, i.e. the same type of thermoplastic copolyester.

Preferably, the polyesters P2, P2' of the first adhesion layer (L2) and the second adhesion layer (L2') both have a glass transition temperature (Tg) in the range of 15 - 50 °C, such as 26 °C, where this glass transition temperature (Tg) is determined with DSC. Such a choice of glass transition temperature provides particularly desirable properties to the adhesion layer (L2) and the adhesion layer (L2').

**In** general, the glass transition temperature (Tg) of the first and/or second adhesion layer (L2,L2') is lower than the glass transition temperature (Tg) of the base layer (L1), preferably at least 10 °C, preferably at least 20 °C, even more preferably at least 30 °C lower. As a result, the laminate structure has particularly desirable adhesion properties and a good retention of dimensional stability (due to the higher glass transition temperature of the base layer L1).

**In** general, the melting temperature of the first and/or second adhesion layer (L2, L2') is lower than the melting temperature of the base layer (L1), preferably at least 30 °C, preferably at least 40 °C, preferably at least 50 °C lower. As a result, the laminate structure has particularly desirable adhesion properties and a good retention of dimensional stability (due to the higher melting temperature of the base layer **L1** and the relatively lower melting temperature of the first and/or second adhesion layer (L2,L2')).

**In** general, it is advantageous that the base layer has a weight of up to 250 g/m², preferably a maximum of 150 g/m², such as around 50 g/m². According to a preferred embodiment, the first adhesion layer (L2) is applied to the first side of the base layer (L1) according to a covering (gsm) in a range of 10 - 40 grams; and the base layer has a weight of up to 250 g/m², preferably a maximum of 150 g/m², such as around 50 g/m². Preferably, the first adhesion layer (L2) is applied in the form of a web of thread-like strands of the thermoplastic polyester P2. More preferably a web of thread-like strands whose strands have a maximum width of less than 1 mm, preferably less than 0.5 mm, even more preferably a thickness of less than 0.1 mm.

According to an embodiment, the polyesters P2, P2' of the first adhesion layer (L2) and the second adhesion layer (L2') (if this second adhesion layer L2' is present) both have a melting point that is lower than the melting point of the base layer (L1), preferably a melting point that is at least 30 °C lower, preferably at least 40 °C lower, preferably at least 50 °C lower, such as more than 80 °C lower. Because the melting point of the adhesion layer(s) (L2)(L2') is lower, these layers can be fused at a temperature at which the base layer retains its dimensional stability. This allows the laminate structure to easily hold the cladding material by fusing the cladding material with the adhesion layer.

According to an embodiment, the polyesters P2, P2' of the first adhesion layer (L2) and the second adhesion layer (L2') both have a melting point in the range of 80 - 200 °C. Preferably where the polyesters P2, P2' of the first adhesion layer (L2) and the second adhesion layer (L2') both have a melt viscosity (Pa*s) (2.16 kg) ± 20% of at least 20 Pa*s, preferably between 20 - 80 Pa*s, such as 30°C Pa*s. Preferably where the polyesters P2, P2' of the first adhesion layer (L2) and the second adhesion layer (L2') both have a glass transition temperature (Tg) in the range of 15 - 50 °C, such as 26 °C, where this glass transition temperature (Tg) is determined with DSC.

According to an embodiment, at least 90 wt. %, preferably at least 95 wt. %, preferably at least 96 wt. %, preferably at least 98.5 wt. % of the laminate structure represented by a terephthalate-based polymer such as polybutylene terephthalate polymer (PBTP) or polyethylene terephthalate (PET), as seen on the total weight of the laminate structure. Such a choice benefits recyclability. As described herein, "gew. %' stands for 'percentage by weight'.

### Vehicle cladding

A further aspect provides for a vehicle trim (50) that includes a laminate structure (10) as described herein. In particular, there are advantageous applications possible for vehicles in the automotive industry (passenger cars, trucks, etc.). In such vehicle cladding (50), a cladding material (M3) is bonded to the adhesion layer (L2'). The adhesion typically refers to a strong bond between materials (i.e. adhesion layer and cladding material) and can be both physical and chemical. Preferably, the cladding material (M3) is fused with the adhesion layer, such fusion ensures an extremely strong bond. Examples of cladding material (M3) are carpet fibres, felt, leather, textiles, artificial leather, vinyl, Alcantara, or combinations thereof. According to a embodiment, the vehicle cladding is chosen from: a textile covering, a plastic covering, a floor covering or combinations thereof. Preferably carpet fibers or felt.

Preferably, and generally applicable in this, cladding material (M3) has been chosen so that it contains PET and/or COPET fibers, and preferably a carpet material, a non-woven material, a textile material has been chosen. PET (Polyethylene terephthalate) and COPET (Co-polyethylene terephthalate) fibers are both types of polyester fibers that can provide desired recyclability. Special preference is given to: tufted carpet based on PET fibres, non-woven based on PET and/or COPET carpet fibres, textiles based on PET fibres. Preferably, the cladding material (M3) is chosen so that it contains PET fibers, and preferably has a melting point of at least 140°C. Surprisingly, such a choice ensures an improved environmental impact without compromising the aesthetic and functional properties.

The vehicle cladding can be provided as one or more loose mats and/or can be used to cover the vehicle via thermoforming. Preferably, the vehicle cladding is designed to be deformed via thermoforming and to serve as the floor of the vehicle.

The vehicle cladding is preferably thermoformable. This makes the cladding soft and flexible when heated. Such a property increases the possibilities in design, applicability and functionality. Furthermore, its thermoformable character has further advantages such as customized shapes, seamless finish, versatility. For example, the vehicle cladding as described herein can also be provided as a cladding for various industrial products.

A particularly desirable embodiment provides that the cladding material (M3) includes PET and/or COPET fibers, and preferably a carpet material, a non-woven material, a textile material, more preferably a non-woven material based on PET fibers.

A particularly desirable vehicle cladding embodiment provides that the cladding material (M3) includes PET and/or COPET fibres; and where the base layer (L1) includes polybutylene terephthalate (PBTP) and/or where the adhesion layer (L2) includes a thermoplastic polyester. Such cladding gives desirable properties.

A particularly desirable embodiment provides that the cladding material (M3) includes a PET nonwoven material, and where the base layer (L1) includes polybutylene terephthalate (PBTP) and/or where the adhesion layer (L2) includes a thermoplastic polyester, more preferably a thermoplastic copolyester. Such cladding gives desirable properties.

According to an embodiment, the laminate structure forms the outer layer of the vehicle cladding, in which case it is preferable that the laminate structure contains only the first adhesion layer (L2, L2').

According to another embodiment, the laminate structure forms a middle layer of the vehicle cladding, in which case it is preferable that the laminate structure includes both the first and second adhesive layers (L2, L2') as described herein.

According to a desired embodiment, the base layer (L1) and the first adhesion layer (L2) each have a melting point, where the melting point of the base layer (L1) is higher than the melting point of the first adhesion layer (L2); and where the cladding material (M3) has a melting point higher than 140°C, and/or lower than the melting point of the base layer (L1), and/or higher than the melting point of the first adhesion layer (L2).

According to a desired embodiment, the base layer (L1) and the first adhesion layer (L2) each have a melting point, where the melting point (e.g. 225°C) of the base layer (L1) is at least 50 °C higher than the melting point (e.g. 138°C) of the first adhesion layer (L2); and where the cladding material (M3) has a melting point that is higher than 140°C and/or lower than the melting point of the base layer (L1) and/or higher than the melting point of the first adhesion layer (L2).

According to an embodiment, at least 90 wt. %, preferably at least 95 wt. %, preferably at least 96 wt. %, preferably at least 98.5 wt. % of vehicle cladding represented by a terephthalate-based polymer such as polybutylene terephthalate polymer (PBTP) or polyethylene terephthalate (PET), as seen on the total weight of the vehicle cladding. Such a choice benefits recyclability. As described herein, "gew. %' stands for 'percentage by weight'.

### Vehicle

A further aspect provides for a vehicle, preferably a car (100), which includes the cladding (50) as described herein. The cladding contains the laminate structure as described herein.

The cladding can be applied as an internal cladding of a passenger(s) or luggage compartment, as a wheel arch cladding, as an cladding of an engine compartment, preferably as a padding of a passenger(s) and/or luggage compartment.

According to an embodiment, the cladding is at least provided as an cladding for a passenger(s) and/or luggage compartment.

The term "automobile" includes passenger cars, trucks, buses and other motorized vehicles where a covering can be provided.

### Manufacturing process

A further aspect provides for a method of manufacturing a laminate structure (10) for holding a cladding material (M3), the process of comprising:
- the provision (S1) of a base layer (L1) with a first side (11) and a second side (12) opposite the first side;
- the application (S2) of a first adhesion layer (L2) to a first side of the base layer (L1);
- the optional application (S2') of a second adhesion layer (L2') on a second side opposite the first side of the base layer (L1);
- where the base layer (L1) is a barrier film that includes a thermoplastic polyester P1, and where the first, and optionally the second, adhesion layer (L2, L2'), respectively includes a thermoplastic polyester P2, P2'.

The product characteristics described herein also apply, *mutatis mutandis,* to the process, in particular to the characteristics related to the base layer (L1), the first and optional second adhesion coat (L2, L2') and the thermoplastic polyesters P2, P2'. For the sake of consistency, these are not repeated, but the combination and associated advantages apply equally to the method and are therefore part of this description.

The application (S2) of the first adhesion layer (L2) preferably includes:
- the melting (S2a) of the thermoplastic polyester P2, preferably thermoplastic polyester P2 based pellets, and then the application (S2b) of the fused thermoplastic polyester P2 to the first side of the base layer (L1) to form the said adhesion layer (L2).

The application (S2) of the second adhesion layer (L2') preferably includes:
- the melting (S2a') of the thermoplastic polyester P2', preferably thermoplastic polyester P2' based pellets, and then the application (S2b) of the fused thermoplastic polyester P2 to the second side of the base layer (L1) to form the said second adhesion layer (L2').

The pellets preferably have an average particle size of 2 - 5 mm, more preferably 3 - 4 mm. In this way, an efficient meltdown is provided, in favor of energy use and sustainability.

More preferably, the method includes:
- the application, in particular applying (S2b'), for example via nozzle application, of the molten thermoplastic polyester P2 (and/or P2') on the base layer (L1) so that several polyester P2 (and/or P2') tracks are formed on it. Such an application has the advantage that a desired adhesion functionality can be provided with less material use, which benefits sustainability and/or recyclability.

More preferably, the method includes:
- disturbing the multiple polyester P2 (and/or P2') tracks with the help of increased airflow so that a network of filaments is formed around the base layer (L1). Such an application has the advantage that the adhesion capacity can be increased. This allows for uniform adhesion with less material use. Preferably the airflow has a speed of at least 3 m/s, preferably at least 5 m/s, preferably between 10 - 100 m/s. This disturbs the tracks in a desired way so that a network of filaments with desired adhesion properties is formed. The mesh also allows for a more efficient fusion of the adhesion layer due to less bulk and faster heat access. In this way, energy-efficient benefits can be achieved.

Preferably, the base layer (L1) is provided from a roll; and/or is treated with a corona treatment before the adhesion layer is applied.

### SHORT FIGURE DESCRIPTION

The invention will now be described in more detail with regard to the figures illustrating some of the preferred embodiments of the invention.
**Fig. 1A and 1B** show respectively an exploded perspective and cross-sectional view of a laminate structure (with base layer L1 and adhesion layer L2)
**Fig. 2A and 2B** show respectively an exploded perspective and cross-section view of a laminate structure (with base layer L1 and adhesion layer L2 and L2')
**Figs. 3A and 3B** show respectively an exploded perspective and cross-sectional view of a cladding with the laminate structure shown in Figs. 1A and 1B.
**Figs. 3C and 3D** show respectively an exploded perspective and cross-sectional view of a cladding with the laminate structure shown in Figs. 2A and 2B.
**Fig. 4A and 4B** show respectively an exploded perspective and cross-sectional view of a cladding according to embodiment, with the laminate structure applied as a middle structure.
**Fig. 5A and 5B** show respectively an exploded perspective and cross-sectional view of a cladding according to embodiment.
**Fig. 6** shows schematically a method of manufacturing a laminate structure.
**Fig. 7** schematically shows a cladding that comprises the laminate structure, where the cladding is attached to a surface.
**Fig. 8** shows schematically that the cladding is used as vehicle cladding.
**Fig. 9A** shows a photograph (in black and white) of an embodiment of a laminate structure, and Fig. 9B shows a schematic cross-section view.

It is understandable that elements with the same reference numbers in the different figures have the same or similar characteristics and effects. These can be combined in various ways (isolated or in combination), unless otherwise indicated.

### DETAILED DESCRIPTION OF THE FIGURES

It is clear that the characteristics and material properties (melting points, density, elongation, degree of covering, thickness, mutual relationship, etc.) of base layer L1 and polyester P1, the adhesion layer L2 and polyester P2 (and optionally layer L2' and polyester P2') as described earlier also apply to the embodiments as shown in the figures.

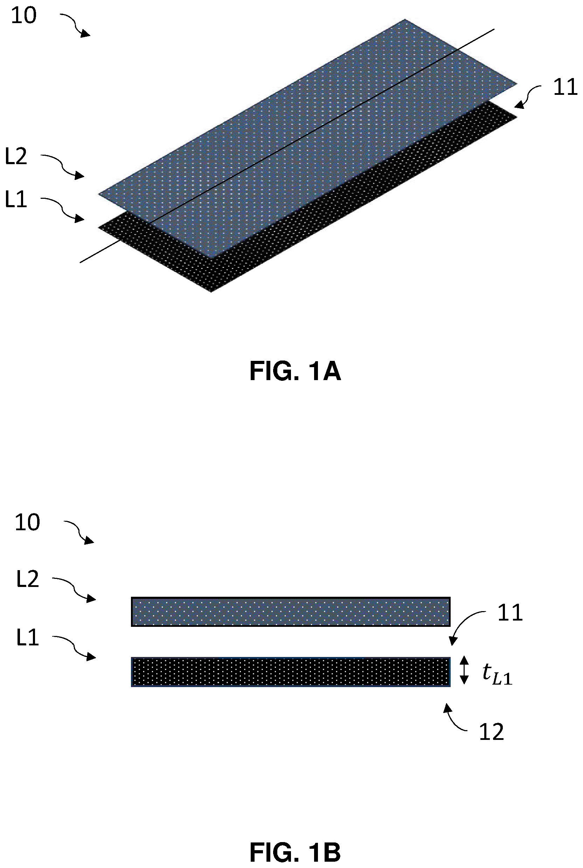

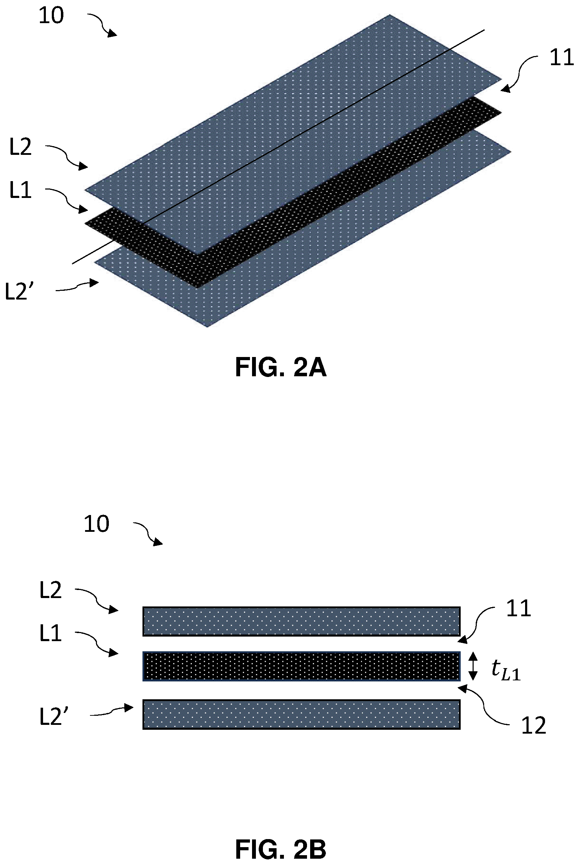

**Fig. 1A** shows laminate structure 10 which includes base layer L1 and adhesion layer L2. **Fig. 1B** shows the cross-section view through the longitudinal axis as shown in Fig. 1A. The adhesion layer L2 covers the top 11 of the base layer L1. The adhesion layer L2 is applied to a top side 11 of the base layer L1. The base layer L1 also has a bottom side 11 to which a second adhesion layer L2' can be applied, as shown in Fig. 2A, 3C, 3D, 4A, 4B). The top and bottom of the base layer L1 are also described as the first side 11 and second side 12 opposite the first side. The lateral sides (not indicated) are the sides between the first side 11 and second side 11. The base layer L1 has been described as a barrier film. The barrier film can contain one or more layers. By containing several layers, properties of the barrier film can be improved. What is special is that the base layer L1 contains the thermoplastic polyester P1, preferably consists almost of the polyester P2 and that the first adhesive layer L2 contains the thermoplastic polyester P2, preferably consists of almost the following. Increasing the proportion of thermoplastic polyester P1 in the barrier film benefits recyclability, especially in combination with the adhesive layer L1 that contains the thermoplastic polyester P2, preferably consisting of almost the thermoplastic polyester P2. Thus, as well as increasing the proportion of thermoplastic polyester P2 in the adhesion layer benefits its recyclability. Preferably, the barrier film is a mono material, which means that the barrier film is almost entirely formed from the thermoplastic polyester P1.

Generally applicable in this, and according to an embodiment of the laminate structure, the laminate structure 10 contains a polyester polymer content of at least 95%, preferably at least 99%, preferably almost 100%, as seen on the basis of the total weight of the laminate structure. This proportion of polyester polymers includes the thermoplastic polyester P1 and the thermoplastic polyester P2 (and optionally P2').

The thickness (µm) of the base layer L1 is shown in the figures with *t*_{*L*1}". The thickness is preferably in the range of 10 - 400 µm.

The base layer (L1) can be made of barrier film that contains one or more (sub)layers, as with barrier film chosen from a co-extruded film. By including multiple (sub)layers, the barrier and/or functional properties can be improved.

**Figs. 2A and 2B** show an embodiment in which two adhesion layers L2, L2' are applied to the base layer L1. In particular, the first adhesion layer L2 was applied to the first side 11 of the base layer L1 and the second adhesion layer L2' was applied to the second side 12 of the base layer L1. Such an embodiment increases the functionality of the laminate structure.

According to a embodiment (e.g. as shown in fig. 2A, 2B), The first adhesion layer L2 is applied to the first side 11 of the base layer L1 and the second adhesion layer L2' is applied to the second side 12 of the base layer L1 and where: - the base layer L1 includes a polyester polymer P1, preferably composed of almost one. - the first adhesion layer L2 contains a polyester polymer P2, preferably consists of almost one.- the second adhesion L2' contains a polyester polymer P2', preferably consists of almost one.

The proportion of polyester polymers (P1, P2, P2') in such a laminate structure is preferably at least 99 %, preferably close to 100 % as seen on the basis of the total weight of the laminate structure.

Preferably, and generally applicable, the melting point of P2, P2' is lower than the melting point of P1. In general, polyester P2, P2' can be the same polymer or may differ in structure (e.g. by incorporating different functional groups).

Preferably Polyester P2 and P2' chosen from thermoplastic copolyesters, more preferably from thermoplastic copolyesters with a melting point that is located in the range of 80 - 180 °C. Preferably, polyester P1 has a melting point that is located in the range of 100 - 350 °C, preferably 160 - 300 °C, and where the melting point of polyester P1 is higher than the melting point of polyester P2 and P2'.

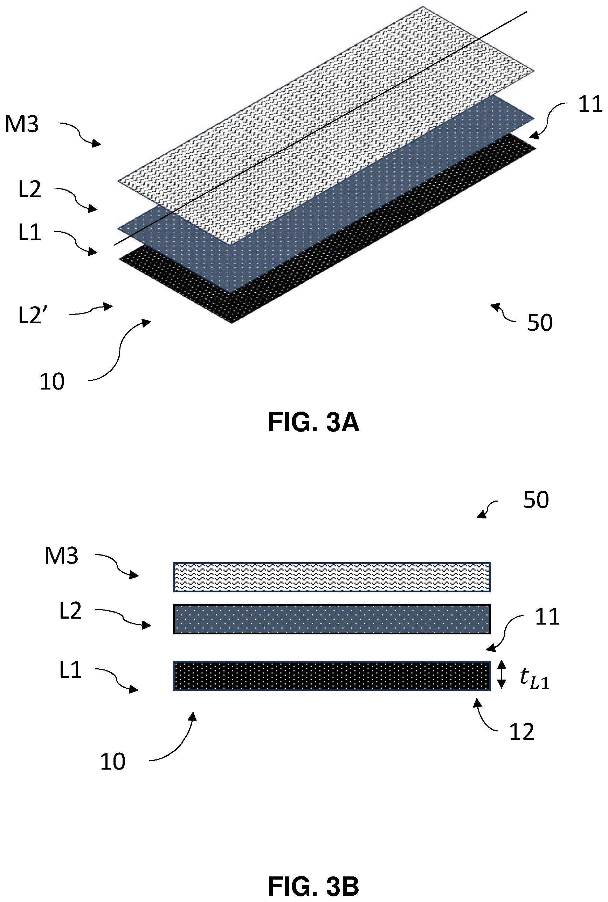

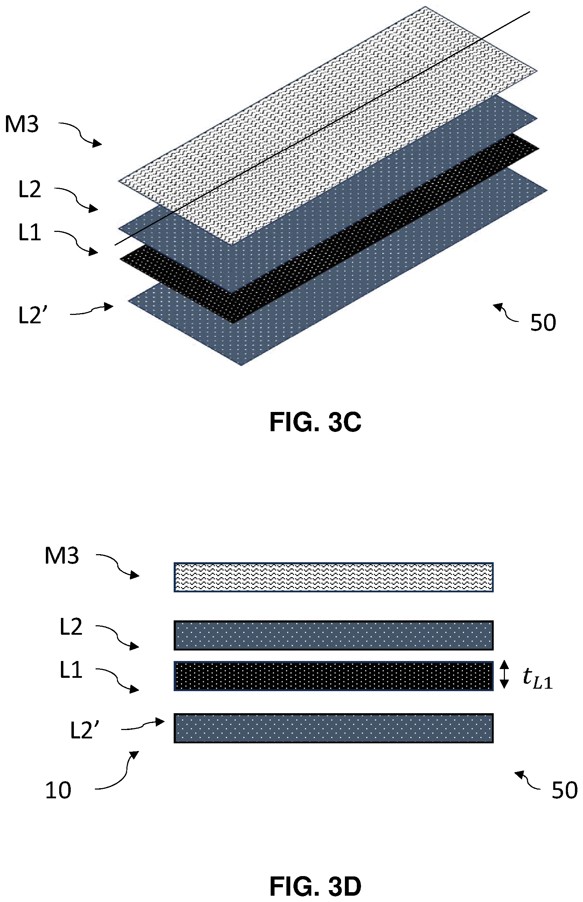

Fig. 3A, 3B, 3C and 3D show vehicle trim embodiments 50. The cladding 50 includes the laminate structure 10 as described herein. More specifically, Figs. 3A and 3B show a cladding with a laminate structure, similar to that in Figs. 1A and 2B. Figs. 3C and 3D show a cladding with a laminate structure, similar to those in Figs. 2A and 2B. As shown in the figures, the cladding M3 is applied so that it covers the adhesion layer L2 of the laminate structure 10. The M3 cladding is preferably fused with the adhesion layer L2, in order to provide a firm mutual adhesion. The cladding is typically chosen according to the application. Examples of suitable M3 cladding are: carpet fibres, felt, leather, textiles, artificial leather, vinyl, Alcantara, or combinations thereof.

It is preferable, in general, that the cladding material M3 includes fibers, in particular PET and/or COPET fibers and/or is manufactured using PET and/or COPET fibers, and preferably is chosen from a carpet material, a non-woven material, a textile material, more preferably a non-woven material based on PET fibers. In particular, it is preferable that the cladding material M3) contains PET and/or COPET fibres; and where the base layer (L1) includes polybutylene terephthalate (PBTP) and/or where the adhesion layer (L2) includes a thermoplastic polyester.

The M3 cladding can be chosen from the group: Tufted carpet material based on PET fibers, a non-woven material based on PET and/or COPET carpet fibers, textiles based on PET fibers.

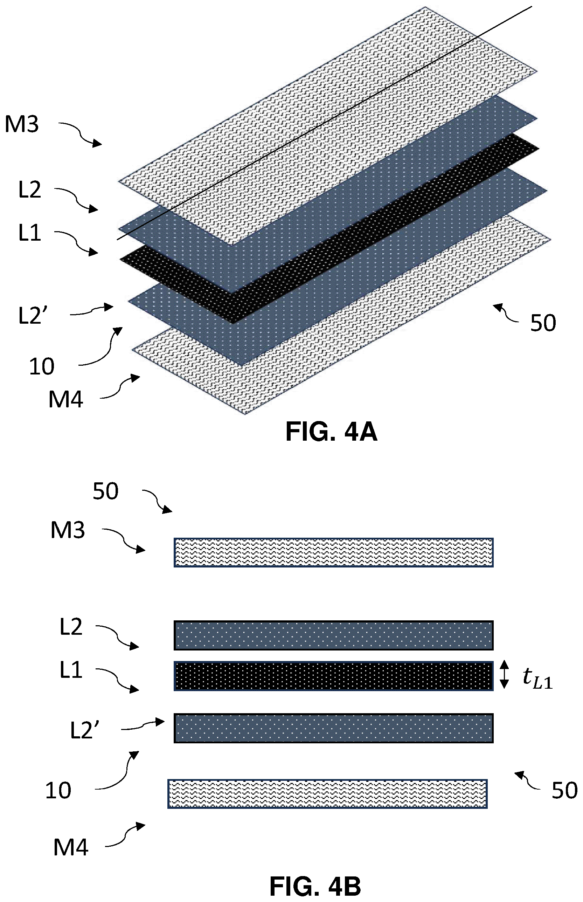

**Figs. 4A and 4B** show an embodiment of a cladding 50 in which the laminate structure 10 is applied as a middle structure. That is to say, the laminate structure 10 is sandwiched between a first cladding material M3 and a second cladding material M4. By placing the laminate structure 10 between two other materials, a construction with specific properties is created depending on the choice of material M3 and M4.

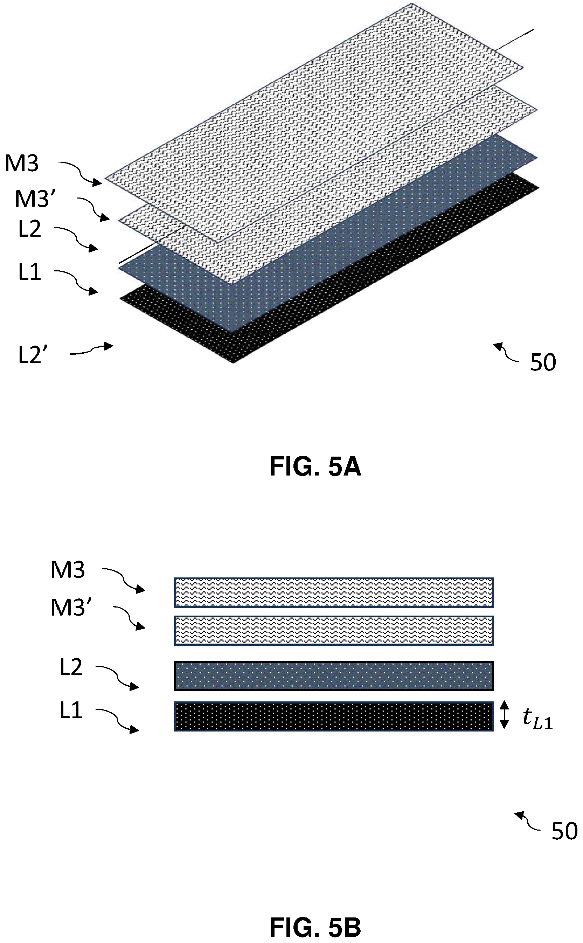

**Fig. 5A and 5B** an embodiment of a cladding 50 in which different types of structures M3, M3' are attached to the laminate structure 10, in particular to the adhesion layer L1 of the laminate structure 10. For example, the material M3' is applied as a layer that includes a material M3' which is chosen from an insulating material. Examples of insulation material are: bitumen, alubutyl, foam, glass wool, or rock wool, rock wool. Such cladding 50 has can provide cost-effective insulation for applications where insulation is desired. More preferably, the insulation material is chosen from a PET-based material, such as mainly fiber and/or foam-based PET-based materials.

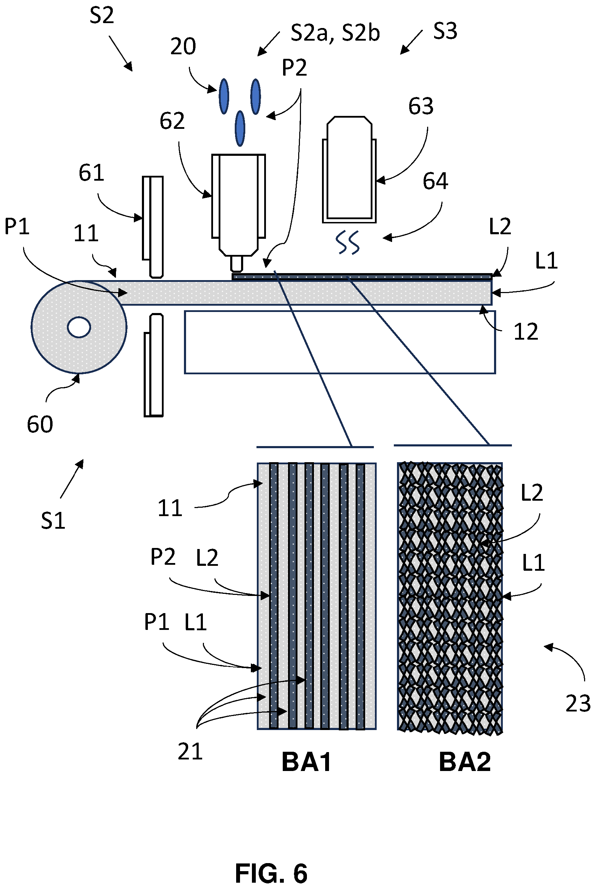

**Fig. 6** will now be used to describe the execution of a process to produce a laminate structure 10. As shown, the base layer L1 is provided (S1). It is clear that the base layer includes the polyester P1 with one or more of the preferred characteristics as described herein (e.g. choice of properties, thickness and mutual relationship with the adhesion layer L2 and optionally L2', etc.).

The base layer L1 can be unrolled from a transport roller 60. The base layer L1 has first side 11 and a second side 12 opposite the first side. The first side (and optionally the second side) are preferably treated with a corona treatment using voltage generator 61, which is designed to treat the first side (and optionally the second side) with a corona treatment. This breaks the surface bonds on the first side (and optionally the second side) of the base layer L1 and creates free radicals. These free radicals make the surface more reactive, allowing other materials, including the L2 adhesion layer, to adhere to it better.

A first adhesion layer L1 is applied to the first side 11 (preferably with a surface treated by voltage generator 61). The adhesion layer L2 is applied with an applicator 61. In principle, any applicator is suitable, examples are extrusion applicator and/or applications that rely on dispersion, rotogravure. Preferably, the adhesion layer L1 is applied via extrusion, more preferably nozzle extrusion. The polyester P2 is supplied as granules 20 (also described as pellets). The granulate or pellets 20 preferably have an average particle size of 2 - 5 mm. The granules 20 are fused (S2a) using extrusion unit 62 and fused (S2b), preferably in the form of filaments 21 (also described as thin wires or tracks) applied to the base layer L1 (S2b'). The filament application is illustrated with top view BA1, then these applied filaments 21 (also described as multiple polyester P2 (and/or P2') tracks) are disturbed to form a network of filaments 23 on the first side of the base layer, as illustrated with top view BA2. The "network of filaments" (as shown in BA2 with reference number 23) has the advantage that a desired adhesion capacity is provided with less material use (e.g. less granules 20 needed).

To supply the network of filaments 23 on the first side (and/or second side) of the base layer L1, it is preferable to use an increased airflow 64 which is provided by increased airflow supply unit 63 which is designed to subject the first layer 11 of the base layer L1 on which the filaments 23 (which comprise the multiple polyester P2 tracks) to an increased airflow 64 so that the filaments 23 (and thus the filaments 23 (and thus the polyester P2 tracks) are disrupted and a network of filaments is reached. The increased airflow 64 provided by the airflow supply unit 63 has a velocity so that the filaments 21 are disturbed and flow over the surface to form a network. The air flow 64 preferably has a speed of at least 3 m/s, preferably between 10 - 100 m/s. This allows for uniform adhesion with less material use. Alternatively, or in addition, increased airflow can be used to disrupt and manipulate the flows of molten polyester P2. This airflow can be strategically provided just after the molten material comes out of the nozzle outlets of the extrusion unit (62) and before these flows fully reach the surface of the base layer (L1) and solidify. This increased airflow engages the still hot and viscous polyester streams from the nozzles. The opening of these nozzle(s) is typically very small, for example with a diameter of less than 1 mm, and preferably less than 0.5 mm. By the force of the air, the individual, linear currents are blown out of their parallel trajectory, stretched, and swirled through each other in a random way.

The top view BA1 also shows that the first adhesion layer L2 has been applied to the first side 11 of the base layer L1. Preferably according to a covering (gsm) in the range of 10 - 40 grams, such as 15 gsm, per square meter. The top view BA1 and BA2 also show that the first adhesion layer L2 was applied to the relevant side of the base layer L1 according to a discontinuous covering where the adhesion layer L2 does not provide a complete coverage of the base layer L1.

Preferably, the first adhesive layer L2 is applied so that it covers at least 25 % of the surface of the relevant side of the base layer L1. Such minimal coverage ensures a desired adhesion capacity. Preferably, the maximum 85 % of the surface of the relevant side of the base layer L1 is covered. The upper limit of the coverage of the adhesion layer L2 ensures an efficient use of materials which benefits durability and/or recyclability.

It is understood that a second adhesion layer L2' (not shown in fig. 6) can be provided on the second side 12 of the base layer L1 in the same or similar way as the first adhesion layer L2 is applied to the first side 11 of the base layer L1 (as described above). The second adhesion layer L2' can be applied in an additional melting step (S2a') (not shown).

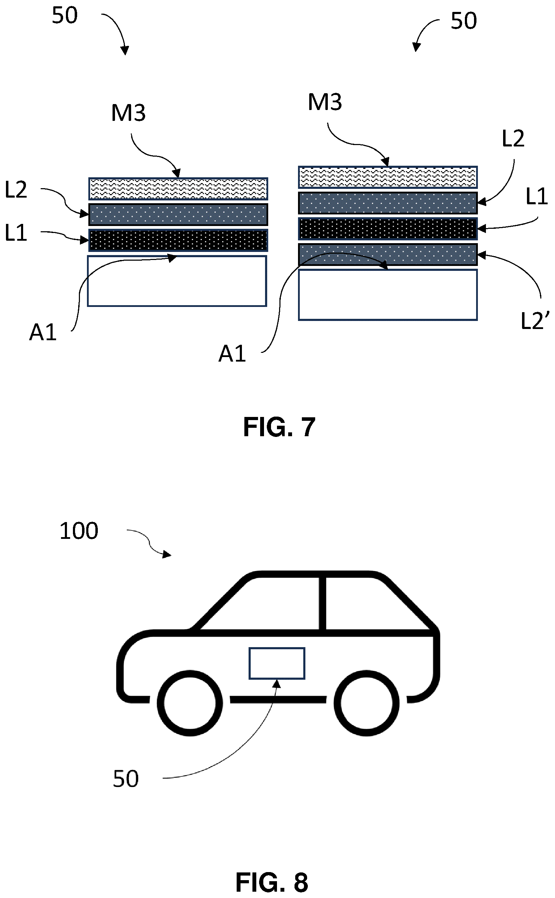

Fig. 7 shows that the cladding 50 that the cladding material M3 and the laminate structure 10 with the base layer L1 and adhesion layer L2 and optionally L2' can be provided on a surface A1 to cover such surface. Such a embodiment thus provides a desired cladding of the A1 surface. The A1 surface can take various shapes. The smart choice of polyesters in the laminate structure (thermoplastic polyester P1 and thermoplastic polyester P2, and optionally polyester P2') allows the cladding to fit closely to the A1 surface. Such a close connection can be improved and/or facilitated by choosing the material properties as described herein.

Fig. 8 shows schematically that the cladding 50 (as described herein) is used as vehicle cladding in vehicle 100, preferably a car (passenger cars, trucks, etc.).

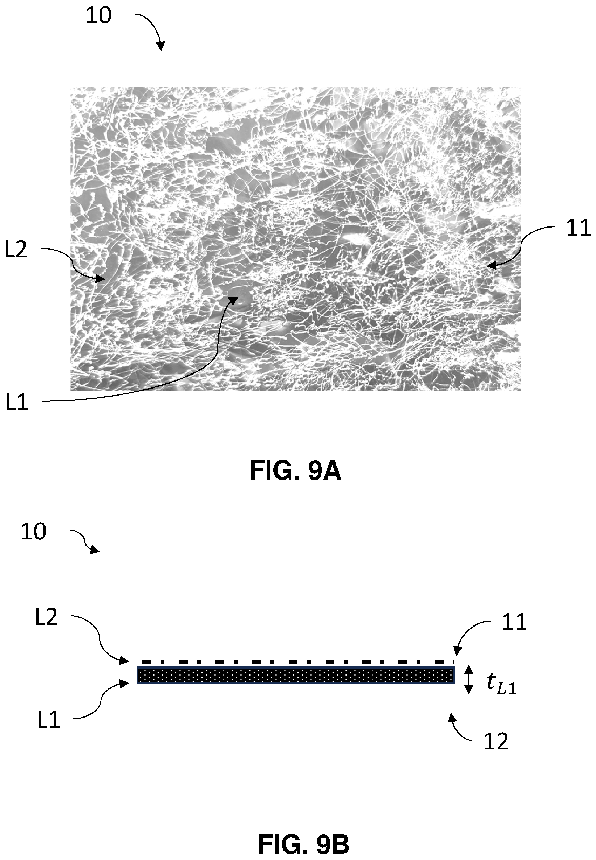

Fig. 9A shows a photograph of a embodiment of a laminate structure (10) for holding cladding material (not shown) of a motor vehicle. The structure has a base layer (L1) with a first side (11) and a second side (not visible in the photo) opposite the first side. A first adhesion layer (L2) is applied to the first side of the base layer (L1) and is designed to hold the cladding material (M3). It is possible that an optional second adhesion layer (L2') has been applied to the other side of the base layer (not shown), in accordance with FIG. 2B as described earlier. In the embodiment of Fig. 9 shown, the base layer (L1) is a barrier film that includes a thermoplastic polyester P1. In particular, according to a certain embodiment, the base layer (L1) is a fiber-free and/or non-fibrous film; more specifically, where the base layer (L1) consists of a fiber-free and non-fibrous film that has an air permeability substantially equal to 0 cm³/s/cm² as determined by ASTM D737.

In the embodiment of Fig. 9 shown, the first adhesion layer (L2) includes a thermoplastic polyester P2, preferably the first adhesion layer (L2) consists almost of the thermoplastic polyester P2. Preferably, the first adhesion layer (L2) is applied to the first side of the base layer (L1) according to a covering (gsm) in a range of 10 - 40 grams, such as 15 gsm, per square meter. If present, the second adhesion layer (L2') is applied to the second side of the base layer (L1) according to a covering (gsm) of 10 - 40 grams. In this way, the inventor can, with the help of the laminate structure, provide an automotive cladding that can be manufactured and recycled in a cost-effective way, as well as improving the environmental impact of the automotive industry. In addition, the described range (gsm) of the coverage of the adhesion layer also offer advantages such as a more efficient use of valuable materials and faster production.

Fig. 9A shows a photographic top view of an embodiment of the laminate structure (10). Fig. 9B shows a corresponding schematic cross-section view of the same structure. These figures illustrate an example of the physical realization of the invention. Figure 9A shows the adhesion layer (L2) applied to the base layer (L1). The following characteristics of the adhesion layer are clearly visible:
- Network structure: The adhesion layer (L2) is not a continuous, solid film, but is clearly formed as an open network of filaments. These filaments are the light, thread-like structures that are visible on the darker substrate.
- Discontinuous Coverage: The mesh does not completely cover the base layer (L1). Clearly open meshes or "areas without coverage" are visible, where the base layer (L1) is directly exposed. The arrow from L1 points specifically indicates such an uncovered zone. The base layer (L1) under the adhesion in question is exposed in the areas without covering, and these areas are mainly surrounded by material from the adhesion layer in question
- Random Orientation: The filaments are distributed in a random, chaotic pattern over the surface of the base layer (L1).
- Interconnectivity of Filaments: The individual filaments are not separate from each other, but intersect and are interconnected at numerous points. They form a cohesive, stable web that functions as a single layer.
- Thread-like Character: The filaments themselves are thin and have the appearance of thread-like strands, which corresponds to the description of the production process where molten polyester is stretched and disrupted.

Embodiments of the laminate structure preferably have one or more of the above characteristics.

Fig. 9B clarifies the structure of the layers shown in Fig. 9A in cross-section:
- Base layer (L1) as Continuous Film: The base layer (L1) is shown as a solid, continuous layer with a defined thickness (tL1). This emphasizes that L1 is a continuous barrier film, as opposed to, for example, a fiber structure or a fibrous structure.
- Adhesion layer (L2) as Discontinuous Layer: The adhesion layer (L2) is schematically represented as a dashed dotted line. This representation illustrates the network structure shown in Fig. 9A; After all, seen from the side, the layer is not present everywhere.

### EXAMPLES

### Example 1 - Laminate structure

The following example serves as an indication of a preferred embodiment of a laminate structure and how it was manufactured. A barrier film based on polybutylene terephthalate (PBT) was provided on a roll. The barrier film was treated (preferably) with a corona treatment in favor of the adhesion capacity. An adhesion layer was then applied to the treated barrier film. The barrier film used was a polybutylene terephthalate (polyester) barrier film in which the polyester had the properties as shown in Table 1. The adhesion layer that was applied had the properties as shown in table 2.

### Thermoplastic polyester of the base layer (L1)

### Polybutylene terephthalate (PBT)

**Table 1**

| Feature | Test Method | Value* | Unity |
|---|---|---|---|
| Density | DIN 53479 | 1,3 | g/cm3 |
| Melting Point | DSC | 225 | °C |
| Tensile stress at yield strength longitudinal/transverse direction | DIN 53457 | 1,3 | N/mm² |
| Maximum strength longitudinal/transverse direction | DIN 53455 | 125 | N/mm² |
| Elongation at break longitudinal/transverse direction | DIN 53455 | 25 to 30 | % |
| Turbidity | ASTM D | 1 | % |
| | 1003 | | |
| Water vapour permeability (85% > 0%; 23°C) | DIN 53112 | 14-16 | g/m²·d |
| Oxygen permeability (40% r.F.; 23°C) | DIN 53380 | 130 | cm³/m²·d·bar |
| Nitrogen permeability | DIN 53380 | 20 | cm³/m²·d·bar |
| CO₂ permeability | DIN 53380 | 650 | cm³/m²·d·bar |
| Air permeability | ASTM D737 | almost 0 | cm³/s/cm² |

| | | | |
|---|---|---|---|
| *with a layer thickness of 25 µm | | | |

The base layer had a thickness in the range of 10 - 400 µm. The adhesion layer was applied with a covering (gsm) of almost 15 gsm, as well as coverage degrees between 10 - 40 gsm are desired. The adhesion layer was applied according to a non-full covering using an increased airflow so that a network of filaments was formed. Applicable in this, the increased airflow (at least 3m/s, preferably in the range of 10 - 100 m/s) preferably has a temperature above 100 °C, more preferably in the range of 150 °C to 300 °C. The use of such a network ensured the desired adhesion and efficient use of materials. It has been found that the base layer (L1) after application by thermoforming, a elongation/transverse direction at break of more than 20% and that this base layer has an air permeability of almost 0cm³/s/cm² as determined by ASTM D737 at a temperature greater than 100°C, such as at a temperature of 110°C

### Thermoplastic polyester of the adhesive layer (L2)

### Co polyester (provided as pellets)

**Table 2**

| Feature | Test Method | Value | Unity |
|---|---|---|---|
| Melting Point | DSC | 118 - 138 | °C |
| Glass transition temperature (Tg) | DSC | 125 | °C |
| Smeltindex | - | 350 | g/10min |
| Melt Viscosity | ASTM D1138 (2,16 kg)(160°C) (Aug 26, 2013) | 30 ± 20% | Pa*s |

In the example, the melting point (118 - 138°C) of the thermoplastic co-polyester in the adhesion layer is lower than the melting point (225°C) of the thermoplastic polyester (polybutylene terephthalate) in the barrier film. The melting point of the adhesion layer was also lower than the melting point of the base layer. Choosing the melting points ensures desired dimensional stability and fusion behavior with a cladding material. Also, the glass transition temperature (Tg) (also called glass transition temperature) of the adhesion layer was lower than the glass transition temperature of the base layer. What is also special is that the air permeability of the base layer used, as determined by ASTM D737 (version Jun 28, 2023) was almost equal to 0 cm³/s/cm², so that it was almost, to completely airtight. Preferably, and generally applicable herein, the air permeability of the base layer L1 is equal to 0 cm³/s/cm². Further examples in which a second adhesion layer is applied provide insights that the adhesion functionality can be increased. The melting temperatures as described herein can be determined via DSC (Differential Scanning Calorimetry), more specifically via DSC according to ISO 11357-1:2023, edition 4 as published on 2023-2.

### Example 2 - Vehicle cladding

The inventors foresee that the laminate structure as manufactured according to example 1 has particularly desirable properties for use in vehicle cladding. Various substrate types can be used so that the cladding with the laminate structure can fulfil a desired function in any type of vehicle and/or depending on the location in the vehicle where the cladding is placed.

The expert will understand on the basis of the above description that the invention can be embodied in different ways and on the basis of different principles. The invention is not limited to the embodiments described above. The embodiments and figures described above are purely illustrative and only serve to enhance the understanding of the invention. The invention will therefore not be limited to the embodiments described herein, but will be defined in the claims.

## Claims

1. A laminate structure (10) for holding cladding material (M3) of a motor vehicle, comprising:
- a base layer (L1) with a first side (11) and a second side (12) opposite the first side,
- a first adhesion layer (L2) that is applied to one of the first and second sides of the base layer (L1) and is designed to hold the cladding material (M3),
- an optional second adhesion layer (L2') applied to the other of the first and second sides of the base layer (L1),
where the base layer (L1) is a barrier film that includes a thermoplastic polyester P1, and the first adhesive layer (L2), and optionally the second adhesive layer (L2'), respectively a thermoplastic polyester P2, P2'; where the first adhesion layer (L2) is applied to the first side of the base layer (L1) according to a covering (gsm) in a range of 10 - 40 grams per square meter; and optionally where the second adhesion layer (L2') is applied to the second side of the base layer (L1) according to a covering (gsm) of 10 - 40 grams per square meter.

2. The laminate structure according to claim 1, where the first adhesion layer (L2) and/or the second adhesion layer (L2') forms a network of filaments on the relevant side of the base layer, where the filaments include the thermoplastic polyester P2 and/or P2'.

3. The laminate structure according to claim 1 or 2, where the first adhesion layer (L2) is applied in the form of a web of thread-like strands of the thermoplastic polyester P2, more preferably where the first adhesion layer (L2) is applied in the form of a web of thread-like strands of which the strands have a maximum width of less than 1 mm, preferably less than 0.5 mm, even more preferably a thickness of less than 0.1 mm.

4. The laminate structure according to claim 2, where the network defines open meshes leaving parts of the underlying base layer (L1) uncovered.

5. The laminate structure according to one of the previous claims 2 - 4, where the filaments in the network are randomly oriented and form a non-geometric, chaotic pattern.

6. The laminate structure according to one of the previous claims 2 - 5, where the filaments cross each other and are fused at the intersections to form a coherent web.

7. The laminate structure according to one of the foregoing claims, where the first adhesive layer (L2) and/or the second adhesive layer (L2') are applied to the relevant side of the base layer (L1) according to a discontinuous coverage, more specifically so that the base layer (L1) is exposed under the relevant adhesive in areas without covering, which areas are mainly surrounded by material of the relevant adhesive layer.

8. The laminate structure according to one of the previous claims, where the base layer (L1) and the first adhesion layer (L2) each have a melting point, where the melting point of the base layer (L1) is higher than the melting point of the first adhesion layer (L2); and where polyester P1 and polyester P2 each have a melting point, where the melting point of polyester P1 is higher than the melting point of polyester P2; more specifically, where the polyester P1 has a melting point in the range of 100 - 350 °C, preferably from 160 - 300 °C, preferably from 180 - 280 °C, even more preferably from 200 - 260 °C; where the polyester P2 has a melting point that lies in a range of 80 - 180 °C, preferably from 90 - 150 °C.

9. The laminate structure according to one of the previous claims, where the polyester P2 is a copolyester; and where the polyester P1 contains a polybutylene terephthalate (PBT); preferably, where polyester P1 has a melting point in a range of 180 - 280 °C and where polyester P2 has a melting point that is in a range of 80 - 200 °C and where the melting point of polyester P1 is higher than the melting point of polyester P2.

10. The laminate structure according to one of the previous claims, where the base layer (L1) is airtight, and where the base layer (L1) is a fibre-free and/or non-fibrous film; more in particular, where the base layer (L1) consists of a fiber-free and non-fibrous film that has an air permeability substantially equal to 0 cm³/s/cm² as determined by ASTM D737.

11. The laminate structure according to one of the above claims, where the base layer (L1) has one or more of the following characteristics:
- a thickness () in a range of 10 - 400 µm, preferably from 11 - 300 µm, preferably from 15 - 200 µm, even more preferably from 20 - 100 µm*t_{L1}*
- has a density (g/cm3) in a range of 0.5 - 3 g/cm3, preferably from 0.9 - 2 g/cm3, as determined by DIN53479, at a thickness of 25 µm
- has a tensile stress at yield strength longitudinally/transversely of at least 10 N/mm² , determined by DIN 53457, at a thickness of 25 µm;
- has a maximum longitudinal/transverse strength of at least 20 N/mm², determined by DIN 53455, at a thickness of 25 µm;
- the base layer (L1) has an elongational elongation/transverse elongation of at break, preferably at least 80 %, preferably at least 90 %, determined by DIN 53455, at a thickness of 25 µm; more preferably where the base layer (L1), as determined after application by thermoforming, has an elongation at break length/transverse direction of more than 20 % as determined by DIN 53455, at a thickness of 25 µm and that this base layer has an air permeability of almost 0 cm³/s/cm² as determined by ASTM D737 at a temperature of more than 100°C;
- has a water vapour permeability of in a range of 0 - 25 g/m². d, determined by DIN 53112, at a thickness of 25 µm at a relative humidity of 85% on one side and 0% on the other side and at 23°C
- has a weight of up to 250 g/m², preferably up to 150 g/m², such as around 50 g/m².

12. The laminate structure according to one of the foregoing claims, wherein the first adhesion layer (L2) is applied to a first side (11) of the base layer (L1) and the second adhesion coat (L2') is applied to a second side (12) of the base layer (L1); and preferably, where the first adhesion layer (L2) and the second adhesion layer (L2') are made of the same material, i.e. where both the first adhesion layer (L2) and the second adhesion layer (L2') are made of the same type of copolyester; and where the polyesters P2, P2' of the first layer (L2) and the second layer of the adhesion layer (L2') both have a melting point that is lower than the melting point of the base layer (L1); preferably, where the polyesters P2, P2' of the first adhesion layer (L2) and the second adhesion layer (L2') both have a melting point in a range of 80 - 200 °C.

13. A vehicle cladding (50) comprising the laminate structure (10) according to one of the foregoing claims, and in which a cladding material (M3) is bonded to the adhesion layer (L2'); where the cladding material (M3) mainly includes PET material; more in particular, where the cladding material (M3) is chosen from: carpet fibres, a non-woven material, a textile, preferably containing PET and/or COPET fibres, even more specifically where the cladding material (M3) contains PET fibres, and preferably has a melting point of at least 140°C.

14. A process for the manufacture of a laminate structure (10) for holding a cladding material (M3), the process including:
- the provision (S1) of a base layer (L1) with a first side (11) and a second side (12) opposite the first side;
- the application (S2) of a first adhesion layer (L2) to a first side of the base layer (L1);
- the optional application (S2) of a second adhesion layer (L2') on a second side opposite the first side of the base layer (L1);
- where the base layer (L1) is a barrier film that includes a thermoplastic polyester **P1,** and where the first, and optionally the second, adhesion layer (L2, L2'), respectively includes a thermoplastic polyester P2, P2';
- where the first adhesion layer (L2) is applied to the first side of the base layer (L1) according to a covering (gsm) in a range of 10 - 40 grams, per square meter; and optionally where the second adhesion layer (L2') is applied to the second side of the base layer (L1) according to a covering (gsm) of 10 - 40 grams, per square meter.

15. The method according to the previous claim, in which the application (S2) of the first adhesion layer (L2) includes:
- the melting (S2a) of the thermoplastic polyester P2, preferably thermoplastic polyester P2 based pellets, preferably with an average particle size of 2 - 5 mm,
- and then applying (S2b) the fused thermoplastic polyester P2 to the first side of the base layer (L1) to form the said adhesion layer (L2); with the application (S2b') of the molten thermoplastic polyester P2 to the base layer (L1) so that several polyester P2 tracks are formed on it; and/or disturbing multiple polyester P2 tracks with the help of an increased airflow so that a network of filaments is formed on the base layer (L1); more specifically, where the increased airflow has a velocity of at least 3 m/s, preferably at least 4 m/s, more preferably at least 5m/s, preferably in the range of 10 - 100 m/s; and/or has a temperature of at least 100 °C, preferably at least 150 °C, such as in the range of 150 °C to 300 °C.
